# EUROPÄISCHE PATENTANMELDUNG

(11) **EP 3 260 013 A2**
(43) Veröffentlichungstag der Anmeldung: **27.12.2017**
(21) Anmeldenummer: 17176624.9
(22) Anmeldetag: 19.06.2017
(51) Int. Cl.: A47B 77/06, A47B 88/90

(54) **MÖBEL, ECKELEMENT UND VERWENDUNG EINES ECKELEMENTES ZUM VERBINDEN VON ZWEI WANDABSCHNITTEN**

(30) Priorität: 23.06.2016 CH 8022016
(71) Anmelder: Huber Innovation GmbH, 8856 Tuggen (CH)
(72) Erfinder: Huber, Christian, 8856 Tuggen (CH)
(74) Vertreter: Hepp Wenger Ryffel AG

(57) **Zusammenfassung**

Ein erster Aspekt der vorliegenden Erfindung betrifft ein Möbel. Das Möbel (1) enthält eine Grundplatte (2), welche eine Ausnehmung (3) enthält. Die Ausnehmung ist insbesondere für einen Abfluss (4) geeignet. Weiterhin enthält das Möbel mindestens zwei Wandabschnitte (6,8; 5,6). Mindestens einer der Wandabschnitte ist an einem Rand der Ausnehmung (3) angebracht. Weiterhin grenzen die mindestens zwei Wandabschnitte an eine Ecke der Ausnehmung der Grundplatte an. Die Wandabschnitte (6,8; 5,6) sind über ein Eckelement (10; 10') miteinander verbunden.

## Beschreibung

Die vorliegende Erfindung betrifft ein Möbel, ein Eckelement und eine Verwendung von einem Eckelement gemäss den Oberbegriffen der unabhängigen Ansprüche.

In Badezimmern und in Küchen werden häufig Möbel unter die sich dort befindenden Waschbecken gestellt. An diese Möbel sind besondere Anforderungen gestellt. Häufig ist das Abflussrohr mit einem Siphon im Weg und verhindert das direkte Platzieren des Möbels. Daher weisen solche Möbel eine U-förmige Ausnehmungen auf. Die U-förmige Ausnehmung ist nach hinten offen und umschliesst das Abflussrohr oder den Siphon. Alternativ können solche U-förmigen Ausnehmungen auch andere Rohrleitungen, Kabel und Kabeleiter umschliessen.

EP 2 353 442 A1 zeigt eine Ausschnittsumrandung für einen Schubkasten. Die Ausschnittsumrandung umfasst zwei gebogene Seitenteile zur seitlichen Umrandung eines nach hinten offenen Ausschnitts in dem Schubkasten. Weiterhin umfasst die Ausschnittsumrandung einen Mittelsteg zur vorderen Begrenzung des Ausschnitts. Durch Verbindungselemente an den Seitenteilen kann auf Verbindungsstücke zum Befestigen des Mittelstegs verzichtet werden. Eine Anpassung an Ausschnitte unterschiedlicher Breite kann durch entsprechendes Ablängen des Mittelstegs erreicht werden. Ein Nachteil der Ausschnittsumrandung ist, dass für jede Möbelgrösse individuell gebogene Seitenteile gefertigt werden müssen.

US 2004/0056569 A1 offenbart ein Möbel mit einer Rahmenstruktur. Die Rahmenstruktur definiert einen inneren Raum des Möbels. Das Möbel enthält einen Ausschnitt, in dem ein Abflussrohr angeordnet werden kann. Der Ausschnitt wird gebildet durch zwei Seitenflächen und einer Frontfläche. Die Seitenfläche und die Frontfläche sind direkt miteinander verbunden. Nachteile ergeben sich durch den Aufwand die Seitenflächen und die Frontfläche miteinander und mit anderen Teilen zu verbinden.

US 5,678,909 offenbart eine Schublade. Die Schublade enthält vier Verbindungswinkelplatten. Die Verbindungswinkelplatten sind an den vier Ecken eines Brettes angeordnet und verbinden Seitenbretter. US 5,678,909 hat den Nachteil, dass kein Abfluss eingepasst werden kann.

Es ist daher die Aufgabe der Erfindung, die Nachteile des Standes der Technik zu überwinden. Insbesondere sollen eine Vorrichtung zur Verfügung gestellt werden, die einfach zusammen zu bauen und einfach an eine Grösse anpassbar ist. Diese Aufgabe wird durch die in den unabhängigen Patentansprüchen definierte Vorrichtung, das in den unabhängigen Patentansprüchen definierte Verfahren und die in den unabhängigen Patentansprüchen definierte Verwendung gelöst. Weitere Ausführungsformen ergeben sich aus den abhängigen Ansprüchen.

Ein erster Aspekt der vorliegenden Erfindung betrifft ein Möbel oder ein Bestandteil eines Möbels. Wenn im Folgenden ein Möbel beschrieben wird, so ist darunter ein Möbel oder aber auch ein Bestandteil eines Möbels zu verstehen. Das Möbel enthält eine Grundplatte, welche eine Ausnehmung enthält. Die Ausnehmung ist insbesondere für einen Abfluss, aber auch Abluftleitungen, Kabelführungen und dergleichen geeignet. Weiterhin enthält das Möbel mindestens zwei Wandabschnitte. Mindestens einer der Wandabschnitte ist an einem Rand der Ausnehmung angebracht. Weiterhin grenzen die mindestens zwei Wandabschnitte an eine Ecke der Ausnehmung der Grundplatte an. Die Wandabschnitte sind über ein Eckelement miteinander verbunden.

Eine Ecke wird hierin verstanden als ein Übergang von einem Wandabschnitt zum nächsten, wobei sich die Wandabschnitte in unterschiedliche Richtungen erstrecken. Die Ecke kann dabei auch gerundet sein.

Dadurch können Möbel gebaut werden, indem Wandabschnitte mit Eckelementen verbunden werden. Das Eckelement ermöglicht es, die Wandabschnitte einfach direkt miteinander zu verbinden. Die Wandabschnitte können einfach gekürzt werden und dann erneut mit demselben Eckelement verbunden werden. Weiterhin können Wandabschnitte schnell miteinander verbunden werden.

Die Eckelemente haben bevorzugt eine Höhe von 1 mm bis 300 mm. Besonders bevorzugt ist die Höhe von 60 mm bis 250mm. Weiter bevorzugt ist die Höhe von 85 mm bis 150 mm. In einer Ausführungsform ist das Eckelement 90 mm hoch.

In einer bevorzugten Ausführungsform ist das Eckelement direkt mit der Grundplatte verbunden.

Dadurch ist das Eckelement stabil mit der Grundplatte verbunden. Weiterhin verleiht die direkte Verbindung den Wandabschnitten zusätzliche Stabilität.

In einer bevorzugten Ausführungsform erstreckt sich die Ausnehmung der Grundplatte bis zum äusseren Rand der Platte.

Dadurch kann das Möbel schnell hingestellt werden. Beispielsweise kann ein Möbel zusammengebaut an einen Abfluss geschoben werden. Weiterhin kann ein Bestandteil eines Möbels, beispielsweise eine Schublade, ausgezogen und wieder eingeschoben werden.
In einer bevorzugten Ausführungsform enthält das Eckelement wenigstens eine erste Anschlagfläche für einen Rand der Grundplatte und die erste Anschlagfläche kontaktiert die Grundplatte.

Dadurch kann das Eckelement bei einer Montage einfach, präzise und schnell entlang einer ersten Richtung eingesetzt werden. Ein Monteur platziert das Eckelement so, dass die Anschlagfläche in Kontakt mit einem Anschlag ist. Besonders bevorzugt ist die Anschlagfläche in Kontakt mit dem weiteren Rand der Grundplatte.

In einer bevorzugten Ausführungsform enthält das Eckelement eine zweite Anschlagfläche für einen weiteren Rand der Grundplatte.

Dadurch kann das Eckelement bei einer Montage einfach, präzise und schnell entlang einer zweiten Richtung von der ersten verschiedenen Richtung eingesetzt werden. Besonders bevorzugt ist die Anschlagfläche in Kontakt mit einem Rand der Grundplatte.

In einer bevorzugten Ausführungsform enthält die Ausnehmung eine erste Ecke mit einem Winkel (W1) mit einem Eckelement, wobei der Winkel grösser als 180 Grad ist. Vorteilhaft ist der Winkel zwischen 210 und 300 Grad, weiter bevorzugt zwischen 245 und 285 Grad. Insbesondere ist der Winkel 270 Grad.

Dadurch können Eckelemente Wandabschnitte verbinden, die an einem Innenwinkel anliegen.

In einer bevorzugten Ausführungsform enthält die Ausnehmung eine zweite Ecke mit einem Winkel (W2) mit einem Eckelement, wobei der Winkel kleiner als 180 Grad ist. Vorteilhaft ist der Winkel zwischen 60 und 120 Grad, weiter bevorzugt zwischen 45 und 75 Grad. Insbesondere ist der Winkel 90 Grad. Dadurch können Eckelemente Wandabschnitte verbinden, die an einem Aussenwinkel anliegen.

In einer bevorzugten Ausführungsform enthält das Möbel zwei oder mehrere Eckelemente, insbesondere vier Eckelemente und fünf Wandabschnitte.

Dadurch kann eine Umrandung der Ausnahme mit Eckelementen umfasst werden.

In einer bevorzugten Ausführungsform wird das Eckelement mit wenigstens einem Wandabschnitt über eine Steckverbindung verbunden.

Dadurch kann das Eckelement ohne weiteres Werkzeug mit den Wandelementen verbunden werden.

In einer bevorzugten Ausführungsform weist das Möbel ein erstes und ein zweites Eckelement auf, welche aufeinander gestapelt sind. Das zweite Eckelement kann eine oder mehr Erhöhungen aufweisen, welche das erste Eckelement abstützen. Durch das Stapeln können verschiedene Höhen einer seitlichen Umrandung verbaut werden. Bevorzugt weist das zweite Eckelement zwei, drei oder mehr Erhöhungen auf.

In einer bevorzugten Ausführungsform ist das Eckelement Bestandteil eines Möbels eine Schublade.

Ein weiterer Aspekt der vorliegenden Erfindung betrifft ein Eckelement für eine Schublade. Das Eckelement enthält eine erste Anlagefläche für den Kontakt zu einer ersten Wand. Das Eckelement enthält eine zweite Anlagefläche für Kontakt zu einer zweiten Wand und eine Grundfläche für Kontakt zu einer Grundplatte. Das Eckelement enthält eine erste Anschlagfläche zum Ausrichten an einem Rand einer Grundplatte.

Durch die Anschlagfläche kann das Eckelement am Rand einer Grundplatte ausgerichtet werden. Dadurch kann das Eckelement bei einer Montage einfach, schnell und präzise angeordnet werden.

In einer bevorzugten Ausführungsform enthält das Eckelement eine zweite Anschlagfläche zum Anpassen an einen weiteren Rand einer Grundplatte.

Durch die zweite Anschlagfläche kann das Eckelement in einer zweiten Richtung ausgerichtet werden. Dadurch kann eine exakte Position des Eckelementes an einer Fläche erreicht werden.

In einer bevorzugten Ausführungsform enthält das Eckelement eine Führung. Das Eckelement ist entlang der ersten Führung auf ein Ende einer ersten Wand aufschiebbar. Besonders bevorzugt wird die Führung durch zwei erste Führungsflächen gebildet.

Dadurch kann bei einer Montage zunächst eine Wand bereitgestellt werden, die zu einer Grundplatte positioniert wird und anschliessend das Eckelement aufgeschoben werden.

In einer bevorzugten Ausführungsform enthält das Eckelement eine zweite Führung. Das Eckelement ist entlang der zweiten Führung auf ein Ende einer zweiten Wand aufschiebbar. Besonders bevorzugt beinhaltet die zweite Führung zwei zweite Führungsflächen.

Dadurch kann das Eckelement auch auf eine zweite Wand aufgeschoben werden. In einer besonders bevorzugten Ausführungsform kann das Eckelement gleichzeitig auf eine erste und auf eine zweite Wand aufgeschoben werden. Dies ermöglicht eine schnelle, einfache Montage.

In einer möglichen Ausführungsform enthält das Eckelement ein L-förmiges Teil. An dem L-förmigen Teil kann die erste und/oder zweite Anschlagfläche angeordnet sein. Der L-förmige Teil erstreckt sich bevorzugt von der Grundfläche weg. Dadurch kann die Ausrichtung des Eckelementes konstruktiv einfach umgesetzt werden.

In einer bevorzugten Ausführungsform ist das Eckelement stapelbar. Bevorzugt weist das Eckelement eine, zwei, drei oder mehr Erhöhungen auf. Die Erhöhungen sind vorteilhaft länglich ausgebildet. Dadurch kann ein zweites Eckelement, welches auf einem ersten Eckelement gestapelt ist, abgestützt werden.

Weiter bevorzugt kann das Eckelement einen zweiten L-förmigen Teil aufweisen. Der zweite L-förmige Teil kann eine, zwei oder mehr Positionierflächen aufweisen. Die Positionierflächen können einander zugewandte Innenflächen des zweiten L-förmigen Teils sein. Dadurch kann ein zweites Eckelement auf einem ersten Eckelement gestapelt werden und präzise relativ zu diesem ausgerichtet werden.

Dadurch kann ein Möbel modular mit mehreren Eckelementen übereinander aufgebaut werden und eine Vielzahl an Längen mit einer geringen Anzahl von Teilen realisiert werden. Dadurch kann eine Wandhöhe des Möbels freier gewählt werden.

Ein weiterer Aspekt der Erfindung betrifft eine Kombination von einen ersten und einem zweiten Eckelement, welche aufeinander gestapelt sind.

Ein weiterer Aspekt der Erfindung beinhaltet die Verwendung eines Eckelementes zum Verbinden von zwei Wandabschnitten, welche eine Ausnehmung begrenzen.

Dadurch kann ein Möbel mit geringem Aufwand montiert werden.

Das Eckelement kann Kunststoff enthalten. Bevorzugt besteht das Eckelement aus Kunststoff. Insbesondere wird das Eckelement durch Spritzguss hergestellt.

Anhand von Figuren welche lediglich Ausführungsbeispiele darstellen wird die Erfindung im Folgenden näher erläutert. Es zeigen schematisch:
- Figur 1:: eine isometrische Ansicht eines erfindungsgemässen Eckelementes aus einer ersten Ansicht;
- Figur 2:: eine zweite isometrische Darstellung des Eckelementes;
- Figur 3:: eine isometrische Darstellung einer zweiten Ausführungsform eines erfindungsgemässen Eckelementes;
- Figur 4:: eine weitere isometrische Darstellung der zweiten Ausführungsform;
- Figur 5:: eine Topansicht einer Schublade;
- Figur 6:: eine isometrische Darstellung eines Ausschnittes der Schublade,
- Figur 7:: eine isometrische Darstellung einer dritten Ausführungsform eines erfindungsgemässen Eckelementes und
- Figur 8:: eine isometrische Darstellung einer vierten Ausführungsform eines erfindungsgemässen Eckelementes.

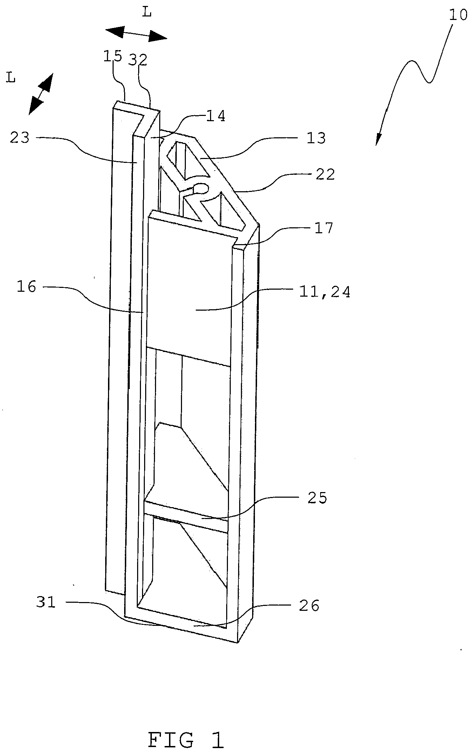

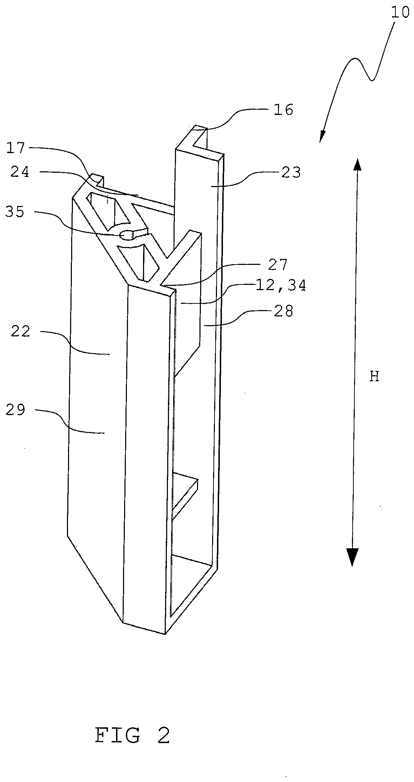

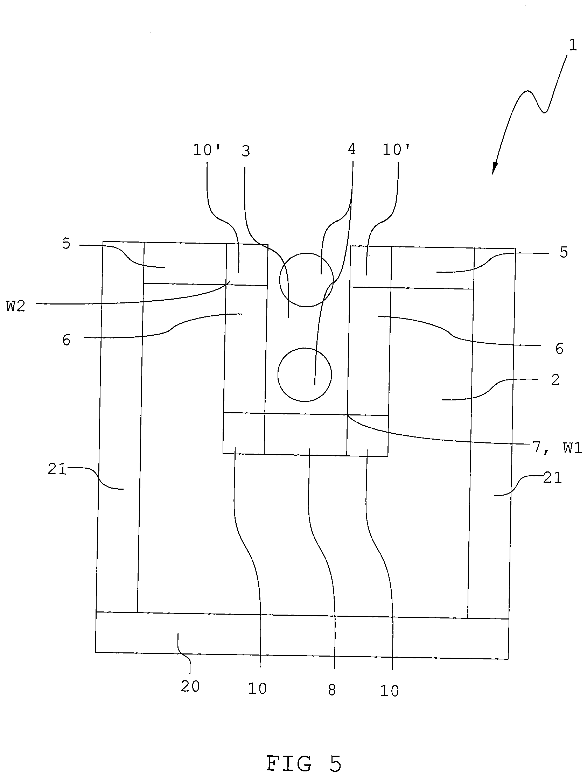

Figur 1 zeigt eine erste Ausführungsform eines Eckelementes 10. Das Eckelement 10 enthält ein Aussenteil 22 und ein L-förmiges Innenteil 23. Die beiden Arme der L-förmigen Innenteil 23 haben die gleichen Längen L. Die Innenteil 23 und das Aussenteil 22 sind verbunden über eine erste Verbindungsplatte 24, eine zweite Verbindungsplatte 34 (siehe Figur 2), einen Zwischensteg 25 und eine Deckplatte 26. Die Deckplatte 26 ist an einem ersten Ende 31 der Aussenteil 22 und des Innenteils 23 angeordnet. Auf der gegenüberliegenden Seite der Deckplatte ist eine Grundfläche 13 angeordnet. Die Grundfläche 13 ist in Kontakt mit einer Grundplatte 2 (siehe Fig. 5) eines Möbels 1 (siehe Fig. 5). Während die Deckplatte 26 das Eckelement 10 abschliesst, erstreckt sich auf der gegenüberliegenden Seite der Innenteil 23 von der Grundfläche 13 bis zu einem zweiten Ende 32. Die Grundfläche 13 schliesst den Aussenteil 22 ab. Der Innenteil 23 enthält auf dem sich von der Grundfläche 13 erstreckenden Abschnitt eine erste Anschlagfläche 14 und eine zweite Anschlagfläche 15.

Das Eckelement 10 in Figur 1 ist geeignet für einen Innenwinkel mit einem Winkel von 270° an der Grundplatte 2. Bei einer Montage werden die Anschlagflächen 14, 15 an einen Innenwinkel W1 (siehe Fig. 5) einer Ausnehmung 3 der Grundplatte 2 angeschlagen. Weiterhin liegt die Grundfläche 13 auf einer Fläche der Grundplatte 2 auf. Dadurch wird die exakte räumliche Position des Eckelementes 10 festgelegt. Bei der Montage werden die Eckelemente 10 auf das Ende einer Wand 6, 8 aufgeschoben. Bei der Montage werden die Eckelemente 10 in Richtung der Grundfläche 2 aufgeschoben. Dabei führen die Führungsflächen 16, 17 das Eckelement. Die Führungsflächen 16, 17 liegen an Aussenseiten einer der Wand 6, 8 an. Das Eckelement 10 ist dann mit einer Wand 6, 8 verbunden (Fig. 5). Die zweite Anlagefläche 12 wird analog in Kontakt mit einer zweiten Wand 8, 6 gebracht (siehe Fig. 2)

Die Verbindungsplatte 24 erstreckt sich von der Grundfläche 13 in Richtung der Deckplatte 26 und enthält eine erste Anlagefläche 11, an der das Eckelement 10 in Kontakt mit einer Stirnseite der anderen Wand 8, 6 (siehe Fig. 5) ist.

In Figur 2 ist das Eckelement 10 in einer zweiten isometrischen Ansicht gezeigt. In der zweiten Ansicht ist das Eckelement 10 gegenüber Fig. 1 um 180° um seine Längsachse gedreht.

Fig. 2 zeigt eine zweite Verbindungsplatte 34. Die zweite Verbindungsplatte 34 enthält eine zweite Anlagefläche 12. An der zweiten Anlagefläche 12 ist das Eckelement 10 im montierten Zustand in Kontakt mit einer Stirnseite der Wand 8. Auch für ein Ende der Wand 8 verfügt das Eckelement 10 über Führungsflächen 27, 28, mit denen das Eckelement auf eine zweite Wand aufgeschoben werden kann. Weiterhin enthält das Eckelement eine Aufnahme 35 für eine Schraube oder einen Bolzen, mit dem das Eckelement 10 an der Grundplatte 2 befestigt werden kann, sodass das Eckelement 10 fix über die Grundfläche 13 mit der Grundplatte 2 verbunden ist. Bei der Montage wird das Eckelement 10 auf die Enden der beiden Wände 6,8 aufgeschoben und dann mit einer einzigen Schraube an der Grundplatte 2 befestigt.

Weiterhin zeigt Figur 2 eine Oberfläche 29 des Aussenteils 22. Die Oberfläche 29 ist sichtbar beim Benutzen der Schublade, da sie zu einem Fach der Schublade gewandt ist. Daher wird die Oberfläche 29 bevorzugt strukturiert. Zu diesem Zweck ist ein Werkzeug, mit dem die Oberfläche 29 geformt wird, erodiert. Die Oberfläche 29 ist abgeschrägt.

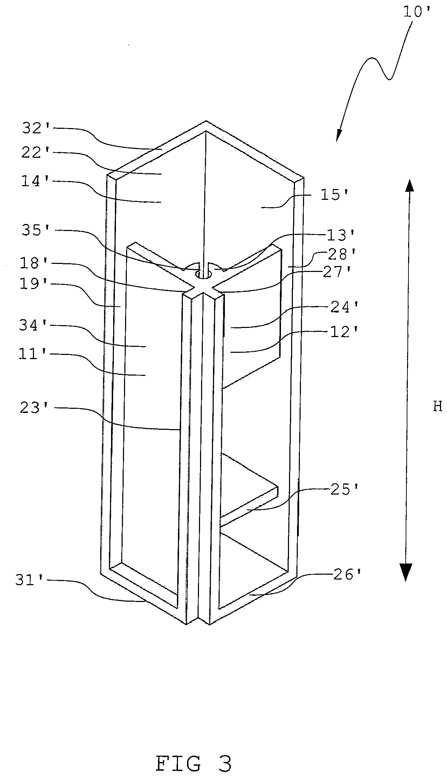

Figur 3 zeigt eine zweite Ausführungsform eines erfindungsgemässen Eckelementes 10'. Das Eckelement 10' enthält ein Innenteil 23' und ein L-förmiges Aussenteil 22'. Das Innenteil 23' und das Aussenteil sind direkt verbunden über Verbindungsplatten 24', 34', ein Zwischensteg 25' und eine Deckplatte 26'. Der Deckplatte 26' schliesst das Eckelement an einem ersten Ende 31' ab. In Richtung eines zweiten Endes 32' des Eckelementes 10' ist eine Grundfläche 13' angeordnet. Die Grundfläche 13' wird durch das Innenteil 23' gebildet. Von der Grundfläche 13' erstreckt sich in Richtung des zweiten Endes 32' das Aussenteil 22'. Auf diesem Teil des Aussenteils 22' sind eine erste Anschlagfläche 14' und eine zweite Anschlagfläche 15' vorgesehen. Bei der Montage wird das Eckelement an den Anschlagflächen 14', 15' an eine Aussenecke W2 der Ausnahme 3 der Grundplatte 2 angeschlagen. Zusammen mit der Grundfläche 13' legen sie die räumliche Position von dem Eckelement in Relation zur Grundplatte fest. Die Grundfläche definiert auch eine Aufnahme 35' für eine Schraube, die durch die Grundplatte 2 in das Eckelement 10' eingeführt wird.

Weiterhin enthält das Eckelement 10' eine erste Anlagefläche 11' und eine zweite Anlagefläche 12'. Die Anlageflächen sind jeweils in Kontakt mit dem Ende einer Wand oder eines Wandabschnittes. Das Eckelement wird auf die Enden der Wände aufgeschoben. Die erste Anlagefläche 11' wird durch die erste Verbindungsplatte 24' gebildet. Die zweite Anlagefläche wird durch die zweite Verbindungsplatte 34' gebildet. Das Aufschieben auf Enden von zwei Wänden 5, 6 wird vereinfacht durch die Führungsflächen 18', 19', 27' und 28'. Das Eckelement 10' umfasst die Stirnseite der Wand 6 durch die Führungsflächen 18', 19' und die Anlagefläche 11'.

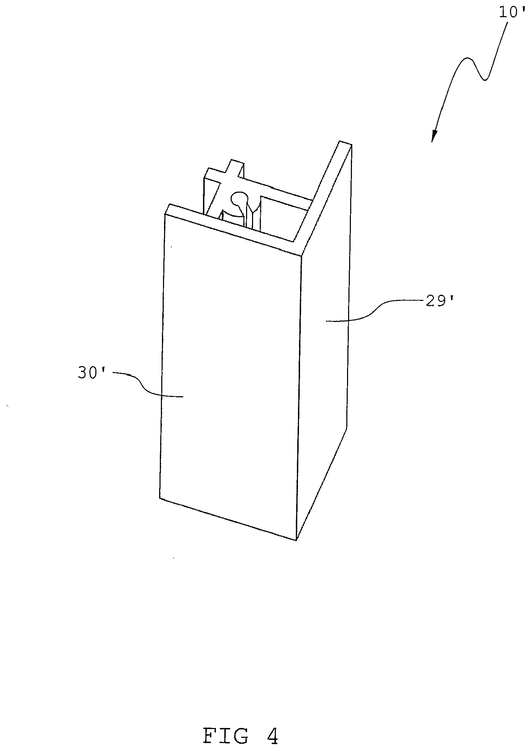

Figur 4 zeigt eine zweite isometrische Ansicht des Eckelementes 10'. Figur 4 zeigt die von aussen sichtbaren Oberflächen 29' und 30'.

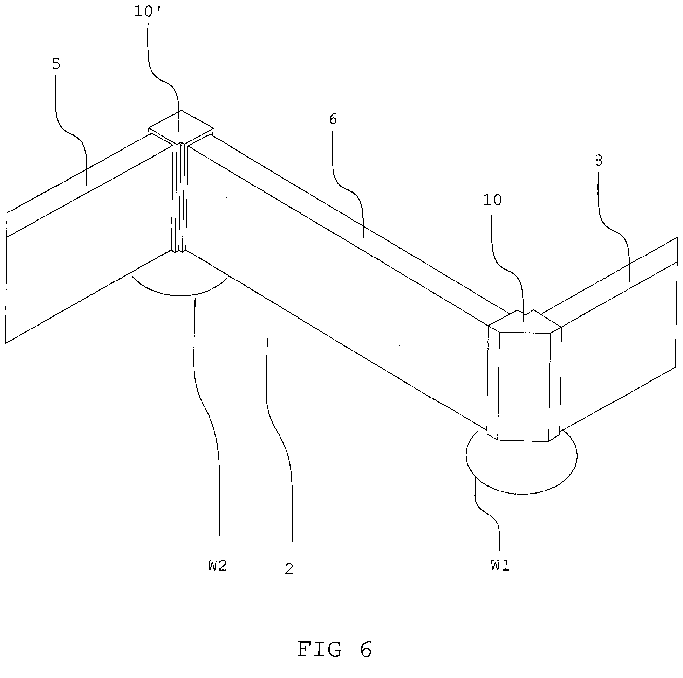

In den Figuren 5 und 6 wird eine Schublade als Teil eines Möbels gezeigt, die mehrere Eckelemente 10 und 10' enthält. Das in Figur 5 gezeigte Möbel 1 ist eine Schublade 1. In Figur 6 ist eine isometrische Ansicht eines Ausschnittes der Schublade aus Figur 5. Die Schublade 1 enthält eine Grundplatte 2. Der äussere Rand der Grundplatte 2 ist begrenzt durch sich horizontal erstreckende Wandabschnitte, die als Wände 5, 6, 8, 20 und 21 realisiert sind. Die Aussenwände 21 und das Frontpanel 20 sind am Aussenrand der Grundplatte 2 angeordnet. Weiterhin enthält die Grundplatte 2 eine Ausnehmung 3. Die Ausnehmung 3 ist so angeordnet, dass die Schublade 1 trotz eines Abflusses 4 in einem Möbel angeordnet werden kann. Es existieren unterschiedlichste Grössen des Abflusses 4. Daher muss die Grösse der Ausnehmung 3 an die Grösse des Abflusses 4 angepasst werden. Die Ausnehmung 3 ist begrenzt durch die Seitenwände 6 und das Mittelstück 8. Das Mittelstück 8 und die Rückwände 5 bestimmen eine Breite der Ausnehmung 3. Die Länge der Seitenwände 6 bestimmt eine Tiefe der Ausnehmung 3. Die Seitenwände und das Mittelstück sowie die Rückwände können einfach angepasst werden, indem sie gekürzt werden. Die Rückwände 5 liegen an den Seitwänden 4 über einen Aussenwinkel W2 mit einem Winkel von 90° an. Verbunden werden eine Rückwand 5 und eine Seitenwand 6 durch ein Eckelement 10' (siehe Figur 3 und 4). Dabei werden die Seitenwand 6 und die Rückwand 5 aufgestellt und das Eckelement 10' von oben in Richtung der Grundplatte auf die Enden der Seitenwand und der Rückwand aufgeschoben. Dann wird von unten eine Schraube durch die Grundplatte 2 in das Eckelement 10' eingebracht.

Ähnlich wird das Eckelement 10 für einen Innenwinkel W1 mit einem Winkel von 270° angebracht. An dem Innenwinkel W1 liegen das Mittelstück 8 und eine Seitenwand 6 an. Das Mittelstück 8 und die Seitenwand 6 werden durch das Eckelement 10 verbunden. Wie bei dem Aussenwinkel W2 werden die Wände 6,8 aufgestellt und anschliessend das Eckelement 10 von oben aufgeschoben und mit einer Schraube von unten durch die Grundplatte fixiert. Alternativ können die Wände auch seitlich eingeschoben werden.
In einer alternativen Ausführungsform sind die Deckplatten 26 oder 26' der Eckelemente 10 oder 10' als separate Teile ausgebildet und aufsetzbar. In dieser Ausführungsform haben die Eckelemente 10, 10' ein maximales Mass und werden vor der Montage abgelängt. Eine Höhe H, die abgelängt wird, wird dem Möbel und den Wänden des Möbels angepasst. Dabei werden die Eckelement 10,10' auf einer Seite der zweiten Enden 32, 32 geschnitten. Nach dem Ablängen wird die Deckplatte 26, 26' auf das offene Ende 32,32' aufgesetzt.

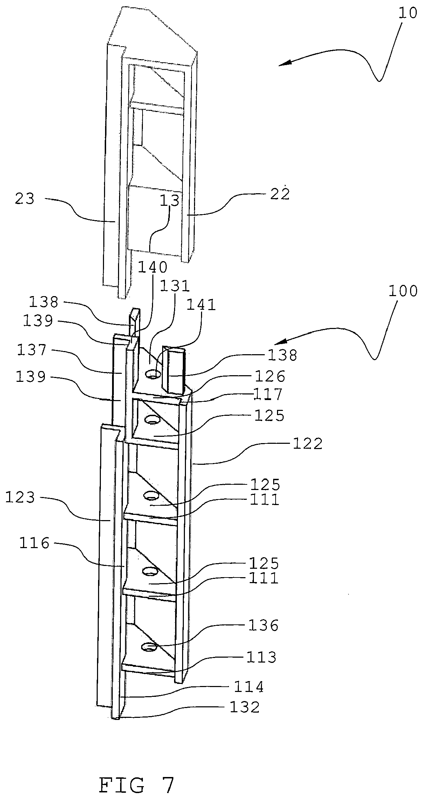

Figur 7 zeigt eine isometrische Darstellung einer dritten Ausführungsform 100 eines Eckelementes und das Eckelement 10 aus den Figuren 1 und 2. Das Eckelement 100 ist ähnlich aufgebaut wie das Eckelement 10. Bezugszeichen, die um 100 erhöht sind, beziehen sich im Folgenden auf ähnliche oder gleiche Merkmale. Wie das Eckelement 10 (siehe Figuren 1 und 2) weist das Eckelement 100 ein L-förmiges Innenteil 123 und ein Aussenteil 122 auf. Das Innenteil 123 und das Aussenteil 122 sind direkt verbunden über drei Zwischenstege 125. Ein als Platte ausgebildeter Deckel 126 schliesst das Eckelement 100 an einem ersten Ende 131 ab. In Richtung eines zweiten Endes 132 des Eckelementes 100 ist eine Grundfläche 113 angeordnet. Von einem ersten Ende 132 erstreckt sich in Richtung des zweiten Endes 32' das Innenteil 123. Auf dem Innenteil 122 sind eine erste Anschlagfläche 114 und eine zweite Anschlagfläche 115 (nicht gezeigt) vorgesehen. Die Anschlagflächen 114 und 115 zeigen in Richtung des Aussenteils 122.

Das Eckelement 10 und das Eckelement 100 sind aufeinander stapelbar. Dafür weist das Eckelement zusätzlich ein zweites L-förmiges Innenteil 137 auf. Das zweite Innenteil 137 ist durch eine Stufe versetzt gegenüber dem ersten 123 angeordnet und erstreckt sich in dieselbe Richtung. Das zweite Innenteil 123 ist in Richtung des Aussenteils 122 um eine Dicke des ersten Innenteils versetzt. Ausserdem verbindet das zweite Innenteil 137 einen der Stege 125 und eine Deckplatte 126. Dadurch sind Positionierflächen 139 auf einer Innenseite des L-förmigen Innenteils mit den Anschlagflächen 14 und 15 des Eckelementes 10 im zusammengesetzten Zustand in Kontakt und zueinander ausgerichtet. Das Eckelement 10 wird dabei in einer Längsrichtung durch eine Endfläche 140 des zweiten L-förmigen Teils 137 an der Grundfläche 13 abgestützt.

Weiterhin weist das Eckelement 100 zwei Erhöhungen 138 auf, die die Grundfläche 13 abstützen. Die Erhöhungen 138 erstrecken sich von der Deckplatte 126 in Längsrichtung des zweiten Eckelementes 100. Endflächen der Erhöhungen 138 sind in einer Ebene mit der Endfläche 140 des zweiten L-förmigen Teils 137. Ausserdem wird das Eckelement 10 an seinem Ende 32 durch das erste L-förmige Innenteil 123 abgestützt.

Die beiden Eckelemente 100 und 10 können verschraubt werden. Für die Verschraubung weist der Deckel 126 ein Durchgangsloch 141 auf, durch das eine Schraube (nicht gezeigt) eingeführt werden kann. Ein Kopf der Schraube wird durch den Deckel abgestützt.

Das Gewinde der Schraube wird in die Schraubenaufnahme 35 (siehe Fig. 2) eingedreht. Dadurch werden die Eckelemente 100 und 10 miteinander verschraubt und die Erhöhungen 138 sowie das zweite L-förmige Innenteil 137 gegen die Grundfläche 13 gedrückt.

Damit die Schraube eingeführt und festgezogen werden kann, weisen die Zwischenstege 125 jeweils ein Durchgangsloch 136 auf. Die Durchgangslöcher 136 sind zueinander und zum Durchgansloch 141 konzentrisch angeordnet.

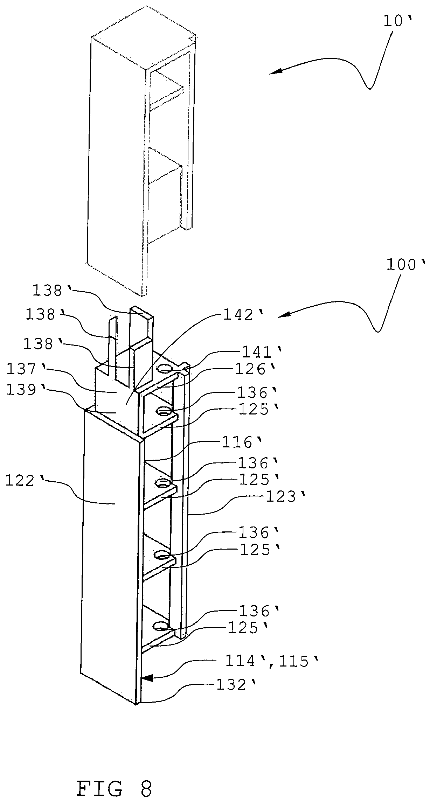

Figur 8 zeigt eine isometrische Darstellung einer vierten Ausführungsform 100' eines Eckelementes und das Eckelement 10' aus den Figuren 3 und 4. Das Eckelement 100' ist ähnlich aufgebaut wie das Eckelement 10'. Wie das Eckelement 10' enthält das Eckelement ein erstes L-förmiges Aussenteil 122' und einen Innenteil 123'. Innenteil 123' und Aussenteil 123' sind durch vier gleichmässig beabstandete Zwischenstege 125' verbunden.

Weiterhin weist das Eckelement 100' ein zweites L-förmiges Aussenteil 142' auf. Das zweite Aussenteil 142' verbindet einen der Zwischenstege 125' und einen als Platte ausgebildeten Deckel 126'. Das zweite L-förmige Aussenteil 142' ist gegenüber dem ersten 122' in Richtung des Innenteils 123' versetzt angeordnet, sodass eine Stufe zwischen den beiden Aussenteilen 142', 122' gebildet wird. Eine Breite der Stufe entspricht einer Wandstärke des ersten Aussenteils 122'.

Wie das Eckelement 100, umfasst das Eckelement 100' Erhöhungen 138', welche sich vom Deckel aus in Längsrichtung des Eckelementes 100' erstrecken. Im Unterschied zum Eckelement 100 weist das Eckelement 100' statt zwei drei verschiedenen Erhöhungen 138' auf. Dadurch kann eine Grundfläche 13' des Eckelementes 10' abgestützt werden auf.

Die Eckelemente 10' und 100' werden zueinander durch Positionierflächen 139' und die Anschlagflächen 14' und 15' (siehe Figur 3) ausgerichtet. Die Positionierflächen 139' bilden Gegenflächen zu den Anschlagflächen 14', 15'. Zusätzlich zu der Abstützung an Grundfläche 13' und den Erhöhungen 138' kann das Eckelement 10' an seinem Ende 32' durch die Stufe zwischen dem erstem und dem zweitem Aussenteil 122', 142' abgestützt werden.

Wie die Eckelemente 10 und 100 können die Eckelemente 10' und 100' verschraubt werden. Für die Verschraubung weist der Deckel 126' ein Durchgangsloch 141' auf, durch das eine Schraube (nicht gezeigt) eingeführt werden kann. Ein Kopf der Schraube wird durch den Deckel 126' abgestützt. Das Gewinde der Schraube wird in die Schraubenaufnahme 35 (siehe Fig. 3) eingedreht. Dadurch werden die Eckelemente 100' und 10' miteinander verschraubt und die Erhöhungen 138' gegen das Ende 32' des Eckelementes 10' gedrückt.

Damit die Schraube eingeführt und festgezogen werden kann, weisen die Zwischenstege 125' jeweils ein Durchgangsloch 136' auf. Die Durchgangslöcher 136 sind daher zueinander und zum Durchgansloch 141 konzentrisch angeordnet.

Wie das Eckelement 10' weist das Eckelement 100' Anschlagflächen 114', 115' (verdeckt in Fig. 8) auf, mit denen die verschraubten Eckelemente 10' und 100' an der Grundplatte 2 225 ausgerichtet werden können.

## Patentansprüche

1. Möbel (1) oder Möbelbestandteil enthaltend,
eine Grundplatte (2), welche eine Ausnehmung (3), insbesondere für einen Abfluss (4), Abluftleitungen oder Kabelführungen, enthält, und
mindestens zwei Wandabschnitte (5, 6), wobei mindestens einer der Wandabschnitte an einem Rand der Ausnehmung angebracht ist und
wobei die mindestens zwei Wandabschnitte (6,8; 5,6) an eine Ecke (6) der Ausnehmung der Grundplatte angrenzen,
**dadurch gekennzeichnet, dass**
die Wandabschnitte über ein Eckelement (10; 10') miteinander verbunden sind.

2. Möbel nach Anspruch 1, **dadurch gekennzeichnet, dass** das Eckelement (10; 10') direkt mit der Grundplatte (2) verbunden ist.

3. Möbel nach einem der vorherigen Ansprüche, **dadurch gekennzeichnet, dass** die Ausnehmung (3) der Grundplatte (2) sich bis zum äusseren Rand der Grundplatte (2) erstreckt.

4. Möbel nach einem der vorherigen Ansprüche, **dadurch gekennzeichnet, dass** das Eckelement wenigstens eine erste Anschlagfläche (14) für einen Rand der Grundplatte (2) enthält und die erste Anschlagfläche (14) die Grundplatte (2) kontaktiert.

5. Möbel nach Anspruch 4, **dadurch gekennzeichnet, dass** das Eckelement eine zweite Anschlagfläche (15) für einen Rand der Grundplatte (2) enthält.

6. Möbel nach einem der vorherigen Ansprüche, **dadurch gekennzeichnet, dass** die Ausnehmung (3) eine erste Ecke mit einem Winkel (W1) mit einem Eckelement (10; 10') enthält, wobei der Winkel grösser als 180 Grad ist.

7. Möbel nach einem der vorherigen Ansprüche, **dadurch gekennzeichnet, dass** die Ausnehmung (3) eine zweite Ecke mit einem Winkel (W2) mit einem Eckelement (10; 10') enthält, wobei der Winkel kleiner als 180 Grad ist.

8. Möbel nach einem der vorherigen Ansprüche, **dadurch gekennzeichnet, dass** das Möbel zwei oder mehrere Eckelemente (10; 10') enthält, insbesondere vier Eckelemente (10; 10') und fünf Wandabschnitte (5, 6, 8).

9. Möbel nach einem der vorherigen Ansprüche **dadurch gekennzeichnet dass** das Möbel eine Schublade ist.

10. Eckelement (10; 10') für ein Möbel, bevorzugt eine Schublade nach Anspruch 9, enthaltend
eine erste Anlagefläche (11; 11') für einen Kontakt zu einer ersten Wand (5; 6; 8) eine zweite Anlagefläche (12; 12') für einen Kontakt zu einer zweiten Wand (5; 6; 8) und eine Grundfläche (13; 13') für einen Kontakt zu einer Grundplatte (2),
**dadurch gekennzeichnet, dass**
das Eckelement eine erste Anschlagfläche (14; 14') zum Ausrichten an einem Rand einer Grundplatte (2) enthält.

11. Eckelement nach Anspruch 10 **dadurch gekennzeichnet, dass** das Eckelement eine zweite Anschlagfläche (15; 15') zum Ausrichten an einem Rand einer Ausnahme (3) einer Grundplatte (2) enthält.

12. Eckelement nach Anspruch 10 oder 11 **dadurch gekennzeichnet, dass** das Eckelement eine erste Führung, insbesondere zwei erste Führungsflächen (16, 17; 16', 17'), enthält, wobei das Eckelement entlang der ersten Führung auf ein Ende einer ersten Wand (5; 6; 8) aufschiebbar ist.

13. Eckelement einem der Ansprüche 10 bis 12 **dadurch gekennzeichnet, dass** das Eckelement eine zweite Führung, insbesondere zwei zweite Führungsflächen (18, 19; 18', 19'), enthält, wobei das Eckelement entlang der zweiten Führung auf ein Ende einer zweiten Wand (5; 6; 8) aufschiebbar ist.

14. Eckelement nach einem der Ansprüche 10 bis 13, **dadurch gekennzeichnet, dass** das Eckelement aus einem Kunststoff ist, und insbesondere durch Spritzguss hergestellt ist.

15. Verwendung eines Eckelementes nach einem der Ansprüche 10 bis 14, zum Verbinden von zwei Wandabschnitten, welche eine Ausnehmung eines Möbels begrenzen.
